(19) Europäisches Patentamt
European Patent Office
Office européen des brevets

(11) EP 4 712 193 A1

(12) **EUROPEAN PATENT APPLICATION**
published in accordance with Art. 153(4) EPC

(43) Date of publication:
**18.03.2026 Bulletin 2026/12**

(21) Application number: **24887846.4**

(22) Date of filing: **31.10.2024**

(51) International Patent Classification (IPC):
***H01M 10/0567*** *(2010.01)* ***H01M 10/0525*** *(2010.01)*

(52) Cooperative Patent Classification (CPC):
Y02E 60/10

(86) International application number:
**PCT/CN2024/128926**

(87) International publication number:
**WO 2025/098234 (15.05.2025 Gazette 2025/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.11.2023 CN 202311497329**

(71) Applicants:
- **Guangzhou Tinci Materials Technology Co., Ltd Guangzhou, Guangdong 510760 (CN)**
- **Jiujiang Tinci Materials Technology Co., Ltd. Jiujiang, Jiangxi 332500 (CN)**

(72) Inventors:
- **LU, Jiasheng Guangzhou, Guangdong 510765 (CN)**
- **FAN, Weizhen Guangzhou, Guangdong 510765 (CN)**
- **SHI, Litao Guangzhou, Guangdong 510765 (CN)**

(74) Representative: **Zwicker, Jörk**
**ZSP Patentanwälte PartG mbB**
**Hansastraße 32**
**80686 München (DE)**

(54) **ELECTROLYTE AND USE THEREOF**

(57) Provided in the present application are an electrolyte and the use thereof. The electrolyte comprises a first additive as shown in formula 1, vinylene carbonate and a boron-containing compound. Applying the electrolyte to a battery can not only reduce the content of $PF_5$ and HF in the electrolyte, but can also improve the electrochemical performance of the lithium-ion battery.

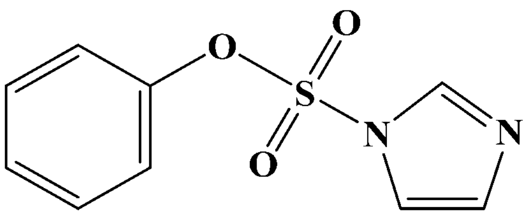

formula 1

EP 4 712 193 A1

## Description

The present application claims the priority to the Chinese Patent Application No. 202311497329.9, filed before the China National Intellectual Property Administration on November 10, 2023, titled "ELECTROLYTE AND USE THEREOF", which is incorporated herein by reference in its entirety.

## TECHNICAL FIELD

The present application relates to an electrolyte and use thereof, and relates to the technical field of energy.

## BACKGROUND

An electrolyte of a lithium-ion battery generally consists of a lithium salt, a solvent, and an additive. However, some lithium salts have poor thermal stability and are prone to decompose under high-temperature conditions to form phosphorus pentafluoride ($PF_5$), which can further react with trace impurities in the electrolyte to form hydrofluoric acid (HF). Among these, $PF_5$, as a strong Lewis acid, may catalyze the decomposition of carbonate-based solvents in the electrolyte, exacerbating gas generation in the lithium-ion battery. Meanwhile, HF may corrode the positive electrode material, causing the structure of the positive electrode material to collapse, thereby causing the capacity of the lithium-ion battery to drop rapidly.

In order to reduce the content of $PF_5$ and HF in the electrolyte, CN113711413A discloses a sulfonyl/sulfonate compound including an imidazole group. The nitrogen-including five-membered heterocycle in the compound exhibits Lewis basicity, enabling it to form a complex with $PF_5$. As a result, the Lewis acidity and reactivity of $PF_5$ are reduced, thereby effectively inhibiting its reaction with trace impurities in the electrolyte to form HF and inhibiting an increase in the chromaticity. However, the nitrogen-including five-membered heterocycle in the sulfonyl/sulfonate compound including an imidazole group may promote the ring-opening decomposition reaction of cyclic carbonate solvents, particularly ethylene carbonate, leading to gas generation in a lithium-ion battery and affecting the storage performance of the lithium-ion battery under high-temperature conditions.

Therefore, it is necessary to provide an electrolyte with low contents of $PF_5$ and HF, which can improve the electrochemical performance of a lithium-ion battery.

## SUMMARY

The present application provides an electrolyte, and when the electrolyte is used in a lithium-ion battery, it can not only reduce the contents of $PF_5$ and HF in the electrolyte, but also improve the electrochemical performance of the lithium-ion battery.

The present application further provides a lithium-ion battery, including the electrolyte as described above. Therefore, this lithium-ion battery has excellent electrochemical performance.

The present application provides an electrolyte, including a first additive represented by formula 1, vinylene carbonate, and a boron-containing compound;

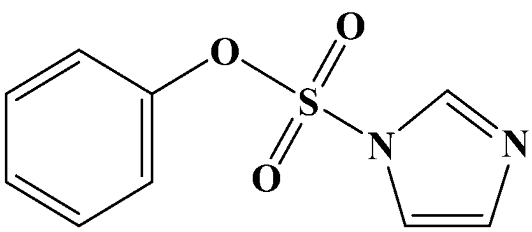

formula 1.

The electrolyte as described above, a mass percentage W1 of the first additive satisfies: $0 < W1 \leq 1\%$, based on a total mass of the electrolyte.

The electrolyte as described above, a mass percentage W2 of the vinylene carbonate satisfies: $0 < W2 \leq 3\%$, based on the total mass of the electrolyte.

The electrolyte as described above, a mass percentage W3 of the boron-containing compound satisfies: $0 < W3 \leq 2\%$, based on the total mass of the electrolyte.

The electrolyte as described above, the boron-containing compound is selected from the group consisting of a boron-containing lithium salt, a borate compound, and a combination thereof.

The electrolyte as described above, the boron-containing lithium salt is selected from the group consisting of

lithium tetrafluoroborate, lithium bis(oxalato)borate, lithium difluoro(oxalato)borate, and a combination thereof; and/or, the borate compound is selected from the group consisting of trimethyl borate and tris(trimethylsilyl) borate, and a combination thereof.

The electrolyte as described above, the mass percentage W1 of the first additive, the mass percentage W2 of the vinylene carbonate, and the mass percentage W3 of the boron-containing compound in the electrolyte satisfy the following relations:

$$W1/W2 = (0.16 \text{ to } 2) : 1;$$

and

$$W1/W3 = (0.5 \text{ to } 2.5) : 1.$$

The electrolyte as described above, the electrolyte further includes lithium hexafluorophosphate.

The electrolyte as described above, a moisture content of the electrolyte is ≤ 20 ppm, and an acidity of the electrolyte is ≤ 50 ppm.

The present application provides a lithium-ion battery, including the electrolyte as described above.

The electrolyte of the present application has a simple composition. When this electrolyte is used in a lithium-ion battery, the contents of $PF_5$ and HF in the electrolyte can be reduced, the occurrence of gas generation and capacity decay of the lithium-ion battery during the charge-discharge process can be reduced, and the electrochemical performance such as high- and low-temperature cycle performance of the lithium-ion battery can be improved.

Since the lithium-ion battery of the present application includes the aforementioned electrolyte, the lithium-ion battery is less prone to gas generation during the charge-discharge process, and the electrolyte is less prone to corrode the positive electrode material. Therefore, the lithium-ion battery of the present application has excellent electrochemical performance.

**DETAILED DESCRIPTION**

In order to make the objectives, technical solutions and advantages of the present application clearer, the technical solutions in embodiments of the present application will be described clearly and completely below in combination with the examples of the present application. Obviously, the examples as described are a part of the examples of the present application, but not all the examples. Based on the examples of the present application, all of other examples obtained by those skilled in the art without creative work fall within the scope of the protection of the present application.

In view of this, a first aspect of the present application provides an electrolyte, including a first additive represented by formula 1, vinylene carbonate (VC), and a boron-containing compound;

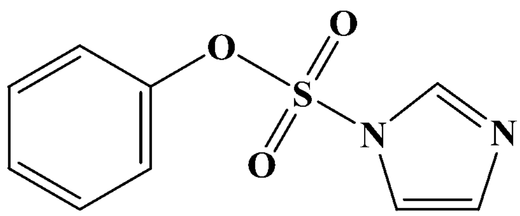
formula 1.

In the present application, the first additive, vinylene carbonate, and the boron-containing compound can all be the commonly used first additive, vinylene carbonate, and boron-containing compound in the art. The first additive, vinylene carbonate, and the boron-containing compound can all be commercially available or prepared by a commonly used preparation method in the art.

In the electrolyte of the present application, the first additive exhibits Lewis basicity, which can inhibit the reaction of $PF_5$, generated by the decomposition of the lithium salt, with trace impurities in the electrolyte, thereby inhibiting the generation of HF and the increase in the chromaticity of the electrolyte. Moreover, the first additive in the electrolyte can form an SEI film rich in lithium alkyl sulfonate and inorganic sulfide components during the charge-discharge processs of the lithium-ion battery. This improves the thermal stability of the SEI film, thereby improving the high-temperature performance of the lithium-ion battery.

Compared to ethylene carbonate (EC), VC in the electrolyte exhibits higher reactivity with Lewis bases, and can preferentially binding to the imidazole group of the first additive, thereby inhibiting the ring-opening decomposition of EC

catalyzed by the imidazole group of the first additive, and inhibiting the occurrence of swelling and bulging of the lithium-ion battery. Moreover, the reaction between VC and the imidazole group of the first additive can form a denser SEI film, further inhibiting side reactions at the interface between the electrode and the electrolyte at high-temperature. This improves the high-temperature storage and high-temperature cycle performance of the lithium-ion battery.

The central boron atom of the boron-containing compound exhibits electron deficiency, which can address the issues of reduced lithium-ion transport performance and increased impedance of the lithium-ion battery caused by the carbonate components in the dense SEI film regulated by VC. This improves the low-temperature performance of the lithium-ion battery. Moreover, the electron deficiency of the boron atom enables the boron-containing compound to exhibits Lewis acidity. The boron-containing compound exhibiting Lewis acidity is prone to bind to the first additive exhibiting Lewis basicity, weakening the Lewis basicity of the imidazole group on the first additive. This further inhibits the ring-opening decomposition of EC catalyzed by the imidazole group of the first additive, thereby inhibiting gas generation of the lithium-ion battery. At the same time, the boron atom on the boron-containing compound can also interact with the oxygen atom on the carbon-oxygen double bond in the EC molecule, thereby playing a role in stabilizing EC.

Therefore, the electrolyte of the present application, including the first additive, VC, and the boron-containing compound, can not only improve the high-temperature storage and high-temperature cycle performance of the lithium-ion battery, but also enable it to have good low-temperature performance.

It can be understood that the contents of the first additive, VC, and the boron-containing compound in the electrolyte has a crucial influence on the comprehensive performance of the electrolyte. Therefore, the present application can further select the contents of the first additive, VC, and the boron-containing compound in the electrolyte to further improve the comprehensive performance of the electrolyte.

In some embodiments of the present application, when a mass percentage W1 of the first additive satisfies: $0 < W1 \leq 1\%$, based on the total mass of the electrolyte, the reaction of $PF_5$, generated by the decomposition of the lithium salt, with trace impurities in the electrolyte can be better inhibited. As a result, an SEI film with better thermal stability can be formed, thereby improving the high-temperature performance of the lithium-ion battery. Further, when $0.1 \leq W1 \leq 0.5\%$, the gas generation in the lithium-ion battery can be avoided, and the high-temperature performance of the lithium-ion battery can be further improved.

In some embodiments of the present application, a mass percentage W2 of the vinylene carbonate satisfies: $0 < W2 \leq 3\%$, based on the total mass of the electrolyte. Further, $0.3 \leq W2 \leq 2.5\%$.

When the content of vinylene carbonate is within the above range, the phenomenon that the imidazole group of the first additive catalyzes the decomposition of EC to generate gas can be better inhibited, and the swelling of the lithium-ion battery during use can be significantly avoided, while ensuring a moderate carbonate content in the SEI film without affecting the low-temperature performance of the lithium-ion battery.

In some embodiments of the present application, a mass percentage W3 of the boron-containing compound satisfies: $0 < W3 \leq 2\%$, based on the total mass of the electrolyte. This results in further improved lithium-ion transport, alleviation of impedance increased caused by VC film formation, and improved the low-temperature performance of the lithium-ion battery. Furthermore, it assists VC in inhibiting the decomposition of EC catalyzed by the imidazole group on the first additive, thereby inhibiting gas generation in the lithium-ion battery.

Further, the boron-containing compound is selected from the group consisting of a boron-containing lithium salt, a borate compound, and a combination thereof.

The boron-containing lithium salt can be a commonly used boron-containing lithium salt in the art. For example, the boron-containing lithium salt is selected from the group consisting of lithium tetrafluoroborate, lithium bis(oxalato) borate, lithium difluoro(oxalato)borate, and a combination thereof.

The borate compound can be a commonly used borate compound in the art. For example, the borate compound is selected from the group consisting of trimethyl borate, tris(trimethylsilyl) borate, and a combination thereof.

In the present application, when the boron-containing compound is a boron-containing lithium salt, the boron-containing lithium salt can further participate in the formation of the SEI film, introduce lithium ions into the SEI film, thereby improving the lithium-ion transport of the SEI film. This further improves the electrochemical performance of the lithium-ion battery, especially the cycle performance and low-temperature discharge performance of the lithium-ion battery.

When the boron-containing compound is a borate compound, a boron-containing SEI film can be formed, and the ionic conductivity of the lithium-ion battery can be improved. Moreover, the borate compound selected in the present application has a simple structure and produce fewer by-products during reaction, which helps to further improve the electrochemical performance of the electrolyte.

In some embodiments of the present application, the mass percentage W1 of the first additive, the mass percentage W2 of the vinylene carbonate, and the mass percentage W3 of the boron-containing compound in the electrolyte satisfy the following relations: $W1/W2 = (0.16 \text{ to } 2) : 1$; and $W1/W3 = (0.5 \text{ to } 2.5) : 1$.

In the present application, when the mass percentages of the first additive, VC, and the boron-containing compound in the electrolyte respectively satisfy the above relations, the first additive, VC, and the boron-containing compound can further act synergistically with each other, which can improve the comprehensive performance of the

lithium-ion battery.

In some embodiments of the present application, the electrolyte includes lithium hexafluorophosphate.

In the present application, when the electrolyte includes lithium hexafluorophosphate, the first additive, VC, and the boron-containing compound act synergistically with each other, which can reduce the content of phosphorus pentafluoride generated by lithium hexafluorophosphate at high-temperature and reduce the content of HF in the electrolyte, thereby improving the electrochemical performance of the lithium-ion battery.

It can be understood that the electrolyte can further include at least one of lithium bis(trifluoromethanesulfonyl) imide (LiTFSI) and lithium bis(fluorosulfonyl)imide (LiFSI).

In the electrolyte, a sum of the mass percentages of lithium hexafluorophosphate, LiTFSI, and LiFSI can be 12.5%.

The electrolyte includes a solvent. The solvent may include a cyclic carbonate and an acyclic carbonate. The cyclic carbonate can be selected from the group consisting of ethylene carbonate, propylene carbonate, fluoroethylene carbonate, and a combination thereof. The acyclic carbonate can be selected from the group consisting of diethyl carbonate, dimethyl carbonate, dipropyl carbonate, ethyl methyl carbonate, methyl propyl carbonate, ethyl propyl carbonate, and a combination thereof. A mass percentage of the cyclic carbonate ranges from 10% to 30%, and a mass percentage of the acyclic carbonate ranges from 70% to 90%, based on the total mass of the solvent.

In some embodiments of the present application, when the moisture content of the electrolyte is $\leq 20$ ppm and the acidity of the electrolyte is $\leq 50$ ppm, the obtained electrolyte can further improve the electrochemical performance of the lithium-ion battery when applied to the lithium-ion battery.

A second aspect of the present application provides a lithium-ion battery, including the aforementioned electrolyte.

It can be understood that the lithium-ion battery of the present application includes a positive electrode plate, a negative electrode plate, a separator, and an outer package.

The positive electrode plate of the present application is not particularly limited, which can be a common positive electrode plate in the art. In some embodiments, a positive electrode active material in the positive electrode plate can be selected from the group consisting of lithium cobalt oxide, lithium iron phosphate, a ternary material, and a combination thereof. Further, the positive electrode active material can be a ternary material.

The negative electrode plate of the present application is not particularly limited, which can be a common negative electrode plate in the art. In some embodiments, a negative electrode active material in the negative electrode plate can be selected from the group consisting of artificial graphite, natural graphite, lithium titanate, silicon, silicon-carbon, silicon-oxygen, silicon-metal compounds, and a combination thereof. Further, the negative electrode active material can be selected from the group consisting of silicon-carbon, silicon-oxygen, and a combination thereof.

In particular, when a high-nickel ternary positive electrode material and a silicon-carbon negative electrode material are used together to prepare a lithium-ion battery, the advantages of a 4680 battery can be fully utilized.

Since the lithium-ion battery of the present application includes the aforementioned electrolyte, the lithium-ion battery is less prone to generate gas during the charge-discharge process and the electrolyte is less prone to corrode the positive electrode material. This lithium-ion battery has excellent electrochemical performance.

Hereinafter, the electrolyte of the present application and its application are described in detail through specific Examples. Various tests and evaluations were carried out according to the following methods. In addition, unless otherwise specified, "parts" and "%" are based on mass.

**Example 1**

The lithium-ion battery of this Example was prepared by a method including the following steps:

(1) Preparation of positive electrode plate

The positive electrode active material NCM523, the binder polyvinylidene fluoride (PVDF), and the conductive agent acetylene black were mixed in a mass ratio of 96.5:2:1.5. N-methylpyrrolidone (NMP) was added, and the mixture was stirred under the action of a vacuum stirrer until the raw materials were mixed into a positive electrode slurry with uniform fluidity to obtain a positive electrode slurry with a solid content of 70 wt%.

The positive electrode slurry was uniformly coated on both surfaces of an aluminum foil with a thickness of 7 $\mu$m, respectively. After drying, the resultant was carried out processes such as rolling, side cutting, sheet cutting, slitting, forming, tab welding and sticking tape were carried out to obtain a positive electrode plate with a specification of 55 mm $\times$ 600 mm. The compacted density of the positive active material layer was 3.5 g/cm$^3$.

(2) Preparation of negative electrode plate

Graphite, the conductive agent conductive carbon black, the thickener carboxymethyl cellulose (CMC), and the binder styrene-butadiene rubber (SBR) were dispersed in deionized water in a mass ratio of 95:1.5:2:1.5 to obtain a negative electrode slurry (the solid content in the negative electrode slurry was 49 wt%). The negative electrode slurry was coated on the upper and lower surfaces of a copper foil with a thickness of 9 μm and dried. Then, the resultant was carried out processes such as cold pressing, side cutting, sheet cutting, slitting, forming, and tab welding to obtain a negative electrode plate with a specification of 60 mm × 700 mm. The compacted density of the negative electrode material layer was 1.6 g/cm$^3$.

(3) Preparation of electrolyte

In a glove box filled with argon (moisture content < 1 ppm, oxygen content < 1 ppm), ethylene carbonate (EC), diethyl carbonate (DEC), and ethyl methyl carbonate (EMC) were mixed uniformly in a mass ratio = 3:2:5 to obtain a base solvent. The fully dried lithium salt, first additive, VC, and boron-containing compound were quickly added to the base solvent to obtain the electrolyte. Based on the total mass of the electrolyte, the mass percentages of the lithium salt, first additive, VC, and boron-containing compound are shown in Table 1, and the remainder was the base solvent.

The moisture content in the electrolyte was tested using the Karl Fischer moisture test method, and the testing instrument was a Metrohm moisture tester. The acidity of the electrolyte was tested using the triethylamine potentiometric titration method, and the testing instrument was a Metrohm potentiometric titrator.

(4) Preparation of lithium-ion battery

The positive electrode plate from step (1), a separator, and the negative electrode plate from step (2) were sequentially stacked, with the separator placed between the positive electrode plate and the negative electrode plate to isolate them. Winding was performed, with the positive tab connected to the positive electrode plate and the negative tab connected to the negative electrode plate, to obtain an un-injected bare cell.

The bare cell was placed in an aluminum-plastic film outer packaging foil, and the positive tab and negative tab were led out from the internal space of the package to the external space of the outer packaging foil. After drying at 80 °C for 72 hours to remove moisture, hot press sealing was performed to obtain a cell to be injected. The electrolyte from step (3) was injected into the dried cell. After processes such as vacuum packaging, standing, formation, shaping, and sorting, the lithium-ion battery was prepared.

The separator was an 8 μm-thick coated polyethylene separator, and the coating was a boehmite coating with a thickness of 0.5 μm.

**Example 2 to Example 30 and Comparative Example 1 to Comparative Example 23**

The compositions of the electrolytes of Example 2 to Example 30 and Comparative Example 1 to Comparative Example 23 were substantially the same as that of Example 1, with the differences shown in Table 1. When the values of W1, W2, and W3 in the electrolyte changed, the mass percentage of the base solvent changed accordingly, and the mass percentage of the lithium salt remained unchanged.

The electrolyte of Example 1 was replaced with the electrolytes of Example 2 to Example 30 and Comparative Example 1 to Comparative Example 23, respectively, to obtain the lithium-ion batteries of Example 2 to Example 30 and Comparative Example 1 to Comparative Example 23.

Table 1

| | W1/% | W2/% | Boron-containing compound: content | W1/W2 | Wl/W3 | Lithium salt: content | Moisture content /ppm | Acidity /ppm |
|---|---|---|---|---|---|---|---|---|
| Example 1 | 0.50% | 1.00% | Lithium difluoro(oxalato)bo rate: 0.2% | 0.5 | 2.5 | Lithium hexafluorophos phate: 12.5% | 11.34 | 9.21 |
| Example 2 | 0.50% | 1.00% | Lithium difluoro(oxalato)bo rate: 0.25% | 0.5 | 2.0 | Lithium hexafluorophos phate: 12.5% | 11.24 | 9.21 |

(continued)

| | W1/% | W2/% | Boron-containing compound: content | W1/W2 | Wl/W3 | Lithium salt: content | Moisture content /ppm | Acidity /ppm |
|---|---|---|---|---|---|---|---|---|
| Example 3 | 0.50% | 1.00% | Lithium difluoro(oxalato)bo rate: 0.33% | 0.5 | 1.5 | Lithium hexafluorophos phate: 12.5% | 10.99 | 9.34 |
| Example 4 | 0.50% | 1.00% | Lithium difluoro(oxalato)bo rate: 0.67% | 0.5 | 0.75 | Lithium hexafluorophos phate: 12.5% | 11.54 | 9.1 |
| Example 5 | 0.50% | 1.00% | Lithium difluoro(oxalato)bo rate: 1% | 0.5 | 0.5 | Lithium hexafluorophos phate: 12.5% | 11.24 | 9.24 |
| Example 6 | 0.10% | 0.20% | Lithium difluoro(oxalato)bo rate: 0.2% | 0.5 | 0.5 | Lithium hexafluorophos phate: 12.5% | 11.32 | 8.18 |
| Example 7 | 0.75% | 1.50% | Lithium difluoro(oxalato)bo rate: 1.5% | 0.5 | 0.5 | Lithium hexafluorophos phate: 12.5% | 11.24 | 7.78 |
| Example 8 | 1.00% | 2.00% | Lithium difluoro(oxalato)bo rate: 2% | 0.5 | 0.5 | Lithium hexafluorophos phate: 12.5% | 11.35 | 5.34 |
| Example 9 | 0.10% | 0.20% | Lithium tetrafluoroborate: 0.2% | 0.5 | 0.5 | Lithium hexafluorophos phate: 12.5% | 11.41 | 8.58 |
| Example 10 | 0.75% | 1.50% | Lithium tetrafluoroborate: 1.5% | 0.5 | 0.5 | Lithium hexafluorophos phate: 12.5% | 11.33 | 7.88 |
| Example 11 | 1.00% | 2.00% | Lithium tetrafluoroborate: 2% | 0.5 | 0.5 | Lithium hexafluorophos phate: 12.5% | 11.24 | 5.21 |
| Example 12 | 0.10% | 0.20% | Tris(trimethylsilane ) borate: 0.2% | 0.5 | 0.5 | Lithium hexafluorophos phate: 12.5% | 11.35 | 8.61 |
| Example 13 | 0.75% | 1.50% | Tris(trimethylsilane ) borate: 1.5% | 0.5 | 0.5 | Lithium hexafluorophos phate: 12.5% | 11.21 | 7.95 |
| Example 14 | 1.00% | 2.00% | Tris(trimethylsilane ) borate: 2% | 0.5 | 0.5 | Lithium hexafluorophos phate: 12.5% | 11.31 | 5.33 |
| Example 15 | 0.50% | 0.25% | Lithium difluoro(oxalato)bo rate: 0.5% | 2.0 | 1.0 | Lithium hexafluorophos phate: 12.5% | 11.82 | 9.24 |
| Example 16 | 0.50% | 0.33% | Lithium difluoro(oxalato)bo rate: 0.5% | 1.5 | 1.0 | Lithium hexafluorophos phate: 12.5% | 11.24 | 9.47 |
| Example 17 | 0.50% | 0.50% | Lithium difluoro(oxalato)bo rate: 0.5% | 1.0 | 1.0 | Lithium hexafluorophos phate: 12.5% | 11.67 | 9.24 |

(continued)

| | W1/% | W2/% | Boron-containing compound: content | W1/W2 | Wl/W3 | Lithium salt: content | Moisture content /ppm | Acidity /ppm |
|---|---|---|---|---|---|---|---|---|
| Example 18 | 0.50% | 0.67% | Lithium difluoro(oxalato)bo rate: 0.5% | 0.75 | 1.0 | Lithium hexafluorophos phate: 12.5% | 11.24 | 9.34 |
| Example 19 | 0.50% | 3.00% | Lithium difluoro(oxalato)bo rate: 0.5% | 0.16 | 1.0 | Lithium hexafluorophos phate: 12.5% | 11.24 | 9.24 |
| Example 20 | 0.50% | 1.00% | Lithium difluoro(oxalato)bo rate: 0.5% | 0.5 | 1.0 | Lithium hexafluorophos phate: 12.5% | 11.37 | 9.1 |
| Example 21 | 0.50% | 1.00% | Lithium bis(oxalato) borate: 0.5% | 0.5 | 1.0 | Lithium hexafluorophos phate: 12.5% | 11.13 | 9.01 |
| Example 22 | 0.50% | 1.00% | Lithium tetrafluoroborate: 0.5% | 0.5 | 1.0 | Lithium hexafluorophos phate: 12.5% | 11.63 | 9.35 |
| Example 23 | 0.50% | 1.00% | Trimethyl borate: 0.5% | 0.5 | 1.0 | Lithium hexafluorophos phate: 12.5% | 11.41 | 9.21 |
| Example 24 | 0.50% | 1.00% | Tris(trimethylsilane ) borate: 0.5% | 0.5 | 1.0 | Lithium hexafluorophos phate: 12.5% | 11.21 | 9.11 |
| Example 25 | 1.50% | 1.00% | Lithium difluoro(oxalato)bo rate: 0.5% | 1.5 | 2.0 | Lithium hexafluorophos phate: 12.5% | 11.34 | 4.21 |
| Example 26 | 0.50% | 4.00% | Lithium difluoro(oxalato)bo rate: 0.5% | 0.125 | 1.0 | Lithium hexafluorophos phate: 12.5% | 11.34 | 9.24 |
| Example 27 | 0.50% | 1.00% | Lithium difluoro(oxalato)bo rate: 3% | 0.5 | 0.17 | Lithium hexafluorophos phate: 12.5% | 11.72 | 9.3 |
| Example 28 | 0.50% | 1.00% | Lithium tetrafluoroborate: 0.3% T rimethyl borate: 0.2% | 0.5 | 1.0 | Lithium hexafluorophos phate: 12.5% | 11.60 | 9.19 |
| Example 29 | 0.75% | 1.50% | Trimethyl borate: 0.5% tris(trimethylsilane) borate: 1% | 0.5 | 0.5 | Lithium hexafluorophos phate: 12.5% | 11.59 | 7.90 |
| Example 30 | 1.00% | 2.00% | Lithium tetrafluoroborate: 1% Lithium bis(oxalato)borate: 1% | 0.5 | 0.5 | Lithium hexafluorophos phate: 12.5% | 11.63 | 5.22 |
| Comparative Example 1 | / | / | / | / | / | Lithium hexafluorophos phate: 12.5% | 11.91 | 13.91 |
| Comparative Example 2 | 0.50% | / | / | / | / | Lithium hexafluorophos phate: 12.5% | 11.34 | 9.24 |

(continued)

| | W1/% | W2/% | Boron-containing compound: content | W1/W2 | Wl/W3 | Lithium salt: content | Moisture content /ppm | Acidity /ppm |
|---|---|---|---|---|---|---|---|---|
| Comparative Example 3 | 1.00% | / | / | / | / | Lithium hexafluorophosphate: 12.5% | 11.24 | 5.34 |
| Comparative Example 4 | / | 0.30% | / | / | / | Lithium hexafluorophosphate: 12.5% | 11.34 | 13.22 |
| Comparative Example 5 | / | 1.00% | / | / | / | Lithium hexafluorophosphate: 12.5% | 11.24 | 13.24 |
| Comparative Example 6 | / | / | Lithium difluoro(oxalato)bo rate: 0.5% | / | / | Lithium hexafluorophosphate: 12.5% | 11.85 | 13.24 |
| Comparative Example 7 | / | / | Lithium bis(oxalato) borate: 0.5% | / | / | Lithium hexafluorophosphate: 12.5% | 11.32 | 13.24 |
| Comparative Example 8 | / | / | Lithium tetrafluoroborate: 0.5% | / | / | Lithium hexafluorophosphate: 12.5% | 11.45 | 13.24 |
| Comparative example 9 | / | / | Trimethyl borate: 0.5% | / | / | Lithium hexafluorophosphate: 12.5% | 11.28 | 13.22 |
| Comparative Example 10 | / | / | Tris(trimethylsilane ) borate: 0.5% | / | / | Lithium hexafluorophosphate: 12.5% | 11.82 | 12.99 |
| Comparative Example 11 | 0.50% | 0.30% | / | / | / | Lithium hexafluorophosphate: 12.5% | 11.34 | 9.32 |
| Comparative Example 12 | 0.50% | 1.00% | / | / | / | Lithium hexafluorophosphate: 12.5% | 11.34 | 9.21 |
| Comparative Example 13 | 0.50% | 3.00% | / | / | / | Lithium hexafluorophosphate: 12.5% | 11.42 | 9.35 |
| Comparative Example 14 | / | 1.00% | Lithium difluoro(oxalato)bo rate: 0.5% | / | / | Lithium hexafluorophosphate: 12.5% | 11.32 | 13.85 |
| Comparative Example 15 | / | 1.00% | Lithium bis(oxalato) borate: 0.5% | / | / | Lithium hexafluorophosphate: 12.5% | 11.21 | 13.24 |
| Comparative Example 16 | / | 1.00% | Lithium tetrafluoroborate: 0.5% | / | / | Lithium hexafluorophosphate: 12.5% | 11.24 | 13.28 |
| Comparative Example 17 | / | 1.00% | Trimethyl borate: 0.5% | / | / | Lithium hexafluorophosphate: 12.5% | 11.34 | 13.65 |

(continued)

| | W1/% | W2/% | Boron-containing compound: content | W1/W2 | Wl/W3 | Lithium salt: content | Moisture content /ppm | Acidity /ppm |
|---|---|---|---|---|---|---|---|---|
| Comparative Example 18 | / | 1.00% | Tris(trimethylsilane ) borate: 0.5% | / | / | Lithium hexafluorophosphate: 12.5% | 11.24 | 12.91 |
| Comparative Example 19 | 0.50 % | / | Lithium difluoro(oxalato)bo rate: 0.5% | / | / | Lithium hexafluorophosphate: 12.5% | 11.36 | 9.32 |
| Comparative Example 20 | 0.50 % | / | Lithium bis(oxalato) borate: 0.5% | / | / | Lithium hexafluorophosphate: 12.5% | 11.65 | 9.45 |
| Comparative Example 21 | 0.50 % | / | Lithium tetrafluoroborate: 0.5% | / | / | Lithium hexafluorophosphate: 12.5% | 11.54 | 9.14 |
| Comparative Example 22 | 0.50 % | / | Trimethyl borate: 0.5% | / | / | Lithium hexafluorophosphate: 12.5% | 11.14 | 9.15 |
| Comparative Example 23 | 0.50 % | / | Tris (trimethylsilane) borate: 0.5% | / | / | Lithium hexafluorophosphate: 12.5% | 11.54 | 9.31 |

As can be seen from Table 1, the moisture contents of the electrolytes in the Examples and Comparative Examples of the present application are substantially the same, and all can be used normally. When the electrolyte includes the first additive, the acidity of the obtained electrolyte is reduced. This is because the Lewis basicity of the imidazole ring in the first additive can enable it to combine with HF and $PF_5$ in the electrolyte, thereby reducing the acidity of the electrolyte and improving the quality of the electrolyte.

**Performance Testing**

The lithium-ion batteries from the Examples and Comparative Examples were subjected to the following performance tests, and the test results are shown in Table 2.

1) 1.0 C/1.0 C Cycle Test at 25 °C

At 25 °C, the lithium-ion battery was charged at a constant current of 1.0 C to 4.4 V, then charged at a constant voltage of 4.4 V until the cutoff current reached 0.05 C. Subsequently, the lithium-ion battery was discharged at a constant current of 1.0 C to a voltage of 3.0 V. The discharge capacity was recorded as C0. The charge-discharge steps were repeated until the capacity decayed to 80% of C0, and the number of cycles was recorded.

2) 1.0 C/1.0 C Cycle Test at 45 °C

At 45 °C, the lithium-ion battery was charged at a constant current of 1.0 C to 4.4 V, then charged at a constant voltage until the cutoff current reached 0.05 C. Subsequently, the lithium-ion battery was discharged at a constant current of 1.0 C to a voltage of 3.0 V. The discharge capacity was recorded as C1. The charge-discharge steps were repeated until the capacity decayed to 80% of C1, and the number of cycles was recorded.

3) Performance Test after storage for 15 days at 60 °C

At 25 °C, the lithium-ion battery was charged at a constant current of 1.0 C to 4.4 V, then charged at a constant voltage of 4.4 V until the cutoff current reached 0.05 C. Subsequently, the lithium-ion battery was discharged at a constant current of 0.5 C to a voltage of 3.0 V. The discharge capacity was recorded as C2. The lithium-ion battery was removed, and its initial thickness was measured as T1 using a thickness tester. At 25 °C, the lithium-ion battery was charged at a constant

current of 1.0 C to 4.4 V, then charged at a constant voltage of 4.4 V until the cutoff current reached 0.05 C. The lithium-ion battery was then transferred to 60 °C and stored for 15 days. Its thickness after 15 days of storage was measured as T2 using a thickness tester. The lithium-ion battery was then discharged at a constant current of 1.0 C, and the discharge capacity was recorded as C3. The capacity retention rate after 15 days of storage at 60 °C was calculated as C3/C2 × 100%, and the thickness swelling rate was calculated as 100% × (T2 - T1) / T1.

4) Low-Temperature Discharge Capacity Retention Rate Test at -20 °C

At 25 °C, the lithium-ion battery was charged at a constant current of 1.0 C to 4.4 V, then charged at a constant voltage of 4.4 V until the cutoff current reached 0.05 C. Subsequently, the lithium-ion battery was discharged at a constant current of 0.5 C to a voltage of 3.0 V. The discharge capacity was recorded as C4. At -20 °C, the lithium-ion battery was stored for 4 hours, then discharged at a constant current of 0.5 C to a voltage of 3.0 V. The discharge capacity was recorded as C5. The capacity retention rate after low-temperature discharging at -20 °C was calculated as C5/C4 × 100%.

Table 2

| | Number of cycles when the capacity of 1C at normal-temperatur e decays to 80% | Number of cycles when the capacity of 1C at 45 °C decays to 80% | Capacity retention rate after storage at high-temperat ure | Thickness swelling rate after storage at high-temperat ure | Capacity retention rate after low-temperature discharging |
|---|---|---|---|---|---|
| Example 1 | 330 | 279 | 82.32% | 10.77% | 79.34% |
| Example 2 | 375 | 325 | 84.71% | 9.30% | 81.70% |
| Example 3 | 431 | 409 | 86.41% | 7.34% | 82.34% |
| Example 4 | 547 | 521 | 89.04% | 5.81% | 84.09% |
| Example 5 | 705 | 653 | 90.13% | 4.07% | 86.15% |
| Example 6 | 421 | 330 | 83.11% | 8.21% | 80.87% |
| Example 7 | 723 | 674 | 92.10% | 3.22% | 86.33% |
| Example 8 | 778 | 701 | 92.31% | 2.17% | 87.01% |
| Example 9 | 391 | 310 | 82.82% | 9.91% | 81.07% |
| Example 10 | 699 | 615 | 90.31% | 4.07% | 85.37% |
| Example 11 | 728 | 654 | 90.00% | 3.17% | 86.21% |
| Example 12 | 388 | 290 | 82.61% | 9.03% | 81.17% |
| Example 13 | 663 | 604 | 90.34% | 4.02% | 85.13% |
| Example 14 | 708 | 671 | 91.64% | 3.40% | 86.09% |
| Example 15 | 403 | 293 | 80.34% | 11.02% | 84.34% |
| Example 16 | 421 | 327 | 82.31% | 10.00% | 83.01% |
| Example 17 | 487 | 351 | 84.07% | 8.34% | 82.30% |
| Example 18 | 529 | 419 | 85.30% | 7.17% | 81.07% |
| Example 19 | 577 | 541 | 93.10% | 2.33% | 75.34% |
| Example 20 | 529 | 508 | 88.91% | 6.11% | 84.20% |
| Example 21 | 511 | 473 | 87.90% | 6.71% | 83.88% |
| Example 22 | 520 | 492 | 88.34% | 6.54% | 83.92% |
| Example 23 | 453 | 412 | 86.53% | 7.30% | 82.50% |
| Example 24 | 487 | 442 | 87.01% | 6.74% | 83.04% |
| Example 25 | 422 | 381 | 80.12% | 11.14% | 80.21% |
| Example 26 | 401 | 341 | 90.31% | 1.84% | 70.01% |

(continued)

| | Number of cycles when the capacity of 1C at normal-temperatur e decays to 80% | Number of cycles when the capacity of 1C at 45 °C decays to 80% | Capacity retention rate after storage at high-temperat ure | Thickness swelling rate after storage at high-temperat ure | Capacity retention rate after low-temperature discharging |
|---|---|---|---|---|---|
| Example 27 | 271 | 255 | 80.01% | 12.84% | 87.31% |
| Example 28 | 470 | 451 | 86.99% | 7.00% | 82.96% |
| Example 29 | 660 | 605 | 90.14% | 4.12% | 85.10% |
| Example 30 | 730 | 660 | 91.04% | 2.68% | 87.12% |
| Comparative Example 1 | 111 | 92 | 75.22% | 15.21% | 61.22% |
| Comparative Example 2 | 391 | 74 | / | 40.54% | 85.14% |
| Comparative Example 3 | 284 | 28 | / | 93.41% | 79.61% |
| Comparative Example 4 | 300 | 244 | 85.34% | 5.34% | 49.91% |
| Comparative Example 5 | 258 | 219 | 90.40% | 3.24% | 40.21% |
| Comparative Example 6 | 200 | 142 | 82.34% | 9.21% | 83.54% |
| Comparative Example 7 | 201 | 111 | 80.12% | 11.24% | 85.65% |
| Comparative Example 8 | 211 | 151 | 82.30% | 9.01% | 80.21% |
| Comparative Example 9 | 151 | 109 | 80.24% | 11.65% | 82.41% |
| Comparative Example 10 | 159 | 99 | 79.10% | 13.31% | 81.99% |
| Comparative Example 11 | 351 | 102 | 69.31% | 25.24% | 80.98% |
| Comparative Example 12 | 281 | 132 | 75.21% | 20.70% | 73.45% |
| Comparative Example 13 | 254 | 207 | 85.14% | 4.92% | 30.64% |
| Comparative Example 14 | 287 | 210 | 87.35% | 7.65% | 61.72% |
| Comparative Example 15 | 311 | 217 | 85.49% | 8.78% | 65.13% |
| Comparative Example 16 | 258 | 239 | 86.00% | 7.35% | 64.87% |
| Comparative Example 17 | 287 | 249 | 83.04% | 8.84% | 63.88% |
| Comparative Example 18 | 301 | 209 | 82.71% | 10.65% | 69.39% |
| Comparative Example 19 | 318 | 101 | 65.32% | 27.34% | 80.25% |

(continued)

| | Number of cycles when the capacity of 1C at normal-temperatur e decays to 80% | Number of cycles when the capacity of 1C at 45 °C decays to 80% | Capacity retention rate after storage at high-temperat ure | Thickness swelling rate after storage at high-temperat ure | Capacity retention rate after low-temperature discharging |
|---|---|---|---|---|---|
| Comparative Example 20 | 311 | 99 | 66.21% | 25.48% | 82.94% |
| Comparative Example 21 | 317 | 107 | 66.01% | 23.84% | 83.41% |
| Comparative Example 22 | 299 | 98 | 67.14% | 23.68% | 82.31% |
| Comparative Example 23 | 321 | 131 | 60.27% | 28.34% | 83.64% |

From Table 2, it can be observed that when the electrolytes of the Examples in the present application are applied to lithium-ion batteries, the normal-temperature cycle performance, high-temperature cycle performance, and low-temperature cycle performance of the lithium-ion batteries can be further improved.

Further, from Example 1 to Example 5, it can be seen that as the content of the boron-containing additive increases, the low-temperature performance of the lithium-ion battery gradually improves. This is because the electron deficiency of the central boron atom of the boron-containing compound, which can improve the problems of reduced lithium-ion transport performance and increased impedance of the lithium-ion battery caused by the carbonate components in the dense SEI film regulated by VC, thereby improving the low-temperature performance of the lithium-ion battery.

From Example 5 to Example 8, Example 9 to Example 11, and Example 12 to Example 14, it can be seen that when the mass ratio of the first additive to VC and the mass ratio of the first additive to the boron-containing compound in the electrolyte remain unchanged, as the mass percentage of each additive (first additive, VC, and boron-containing compound) increases, the electrochemical performance of the lithium-ion battery improves progressively. This demonstrates that an equal proportional increase in each additive contributes to the improvement of the electrochemical performance of the lithium-ion battery.

From Example 15 to Example 20, it can be seen that as the VC content in the electrolyte increases, the high-temperature stability and high-temperature storage performance of the lithium-ion battery improve. The reason is that, compared to ethylene carbonate (EC), VC in the electrolyte exhibits higher reactivity with Lewis bases, and can preferentially binding to the imidazole group of the first additive, thereby inhibiting occurrence of the ring-opening decomposition of EC catalyzed by the imidazole group of the first additive and inhibiting swelling and bulging of the lithium-ion battery. Moreover, the reaction between VC and the imidazole group of the first additive can form a denser SEI film, further inhibiting side reactions at the interface between the electrode and the electrolyte interface at high-temperature. This improves the high-temperature storage and high-temperature cycle performance of the lithium-ion battery.

From Example 20 to Example 22 and Example 23 to Example 24, it can be seen that when the boron-containing compound is a boron-containing lithium salt, the resulting lithium-ion battery exhibits more excellent electrochemical performance. This is because the boron-containing lithium salt can also participate in the formation of the SEI film, introduce lithium ions into the SEI film, thereby improving lithium-ion transport in the SEI film. This further improves the electrochemical performance of the lithium-ion battery, particularly the cycle performance and low-temperature discharge performance.

From Example 1 to Example 24 and Example 25 to Example 27, it can be seen that by specifically selecting the contents of the boron-containing compound, VC, and the first additive in the electrolyte, the overall performance of the lithium-ion battery can be improved. The reason is that by further optimizing the contents of the boron-containing compound, VC, and the first additive in the electrolyte, these components can synergy better with each other, fully leveraging the advantages of the boron-containing compound, VC, and the first additive to improve the overall performance of the lithium-ion battery.

From Example 28 to Example 30, it can be seen that selecting different types of boron-containing compounds in the electrolyte can improve the overall performance of the lithium-ion battery. The reason is that the boron-containing compounds within the scope of the present application can participate in the formation of the SEI film, and improve the ionic conductivity of the lithium-ion battery.

From Comparative Example 2 and Comparative Example 3, it can be seen that using the first additive alone leads

to severe gas generation. This is attributed to the Lewis basicity of its imidazole group, which catalyzes solvent decomposition.

From Comparative Example 4 and Comparative Example 5, it can be seen that when VC is used alone, the lithium-ion battery exhibits good high-temperature performance, but poor low-temperature performance. The reason is that although VC can form a long carbon-chain SEI film through polymerization, this SEI film hinders lithium-ion conduction.

From Comparative Example 6 to Comparative Example 10, it can be seen that using the boron-containing additive alone does not significantly improve the high-temperature cycle and high-temperature storage performance of the lithium-ion battery. The reason is that the electrode-electrolyte interface film formed by the boron-containing additive is discontinuous and has poor stability.

From Comparative Example 11 to Comparative Example 13, it can be seen that when the electrolyte does not include a boron-containing compound, but only the first additive and VC, both the high-temperature and low-temperature performance of the lithium-ion battery are affected. As the content of the second additive decreases, the second additive cannot inhibit the degradation caused by the first additive, leading to reduction of the capacity retention rate after high-temperature storage of the lithium-ion battery and severe gas generation. As the content of the second additive increases, the impedance rises, affecting lithium-ion transport and resulting in poor low-temperature discharge performance of the lithium-ion battery.

From Comparative Example 14 to Comparative Example 18, it can be seen that the combined use of VC and the boron-containing additive can alleviate the high impedance issue caused by VC film formation. However, due to the poor stability of the film formed by the boron-containing additive, it is not advisable to add in large quantities. Only a small amount of the boron-containing additive can be used to reduce impedance. Therefore, using the boron-containing additive alone to reduce impedance is effective, but far from sufficient to meet the needs of use.

From Comparative Example 19 to Comparative Example 23, it can be seen that using the boron-containing additive alone to inhibit the Lewis basicity of the first additive is insufficient, and can easily resulting in poor high-temperature performance of the lithium-ion battery.

Finally, it should be noted that the above embodiments are only used to illustrate the technical solutions of the present application and not to limit them. Although the present application has been described in detail with reference to the foregoing embodiments, those of ordinary skill in the art should understand that they can still modify the technical solutions described in the foregoing embodiments or make equivalent substitutions to some or all of the technical features. Such modifications or substitutions do not cause the essence of the corresponding technical solutions to depart from the scope of the technical solutions of the embodiments of the present application.

## Claims

1. An electrolyte, comprising a first additive represented by formula 1, vinylene carbonate, and a boron-containing compound;

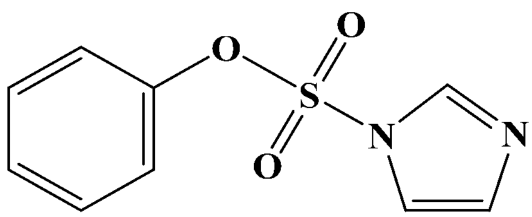

formula 1.

2. The electrolyte according to claim 1, wherein a mass percentage W1 of the first additive satisfies: $0 < W1 \leq 1\%$, based on a total mass of the electrolyte.

3. The electrolyte according to claim 1 or 2, wherein a mass percentage W2 of the vinylene carbonate satisfies: $0 < W2 \leq 3\%$, based on the total mass of the electrolyte.

4. The electrolyte according to any one of claims 1 to 3, wherein a mass percentage W3 of the boron-containing compound satisfies: $0 < W3 \leq 2\%$, based on the total mass of the electrolyte.

5. The electrolyte according to any one of claims 1 to 4, wherein the boron-containing compound is selected from the group consisting of a boron-containing lithium salt, a borate compound, and a combination thereof.

**6.** The electrolyte according to claim 5, wherein the boron-containing lithium salt is selected from the group consisting of lithium tetrafluoroborate, lithium bis(oxalato)borate, lithium difluoro(oxalato)borate, and a combination thereof; and/or,
the borate compound is selected from the group consisting of trimethyl borate, tris(trimethylsilyl) borate, and a combination thereof.

**7.** The electrolyte according to any one of claims 1 to 6, wherein the mass percentage W1 of the first additive, the mass percentage W2 of the vinylene carbonate, and the mass percentage W3 of the boron-containing compound in the electrolyte satisfy following relations:

$$W1/W2 = (0.16 \text{ to } 2) : 1;$$

and

$$W1/W3 = (0.5 \text{ to } 2.5) : 1.$$

**8.** The electrolyte according to any one of claims 1 to 7, wherein the electrolyte further comprises lithium hexafluorophosphate.

**9.** The electrolyte according to any one of claims 1 to 8, wherein a moisture content of the electrolyte is ≤ 20 ppm, and an acidity of the electrolyte is ≤ 50 ppm.

**10.** A lithium-ion battery, comprising the electrolyte according to any one of claims 1 to 9.

## INTERNATIONAL SEARCH REPORT

International application No.
**PCT/CN2024/128926**

**A. CLASSIFICATION OF SUBJECT MATTER**

H01M10/0567(2010.01)i；H01M10/0525(2010.01)i

According to International Patent Classification (IPC) or to both national classification and IPC

**B. FIELDS SEARCHED**

Minimum documentation searched (classification system followed by classification symbols)

IPC/CPC:H01M10/-

Documentation searched other than minimum documentation to the extent that such documents are included in the fields searched

Electronic data base consulted during the international search (name of data base and, where practicable, search terms used)

CNTXT, DWPI, WPABS, ENTXTC, VEN, CNKI, ISI-Web of Science, STN: 电解液, 磺, 磺酰基, 硼, 容量, 衰减, 碳酸亚乙烯酯, 阻抗, 咪唑, 磺酰基咪唑, imidazole, sulfonate, electrolyte, vinylene carbonate, boron, lithium tetrafluoroborate, trimethyl borate, tris(trimethylsilane)borate, electrochemical, 1198183-95-7

**C. DOCUMENTS CONSIDERED TO BE RELEVANT**

| Category* | Citation of document, with indication, where appropriate, of the relevant passages | Relevant to claim No. |
|---|---|---|
| PX | CN 117276672 A (GAUNGZHOU TINCI MATERIALS TECHNOLOGY CO., LTD. et al.) 22 December 2023 (2023-12-22)<br>claims 1-10 | 1-10 |
| Y | CN 115863760 A (GUANGZHOU TINCI MATERIALS TECHNOLOGY CO., LTD.) 28 March 2023 (2023-03-28)<br>embodiment 12, table 1, and description, paragraph 42 | 1-10 |
| Y | CN 114142091 A (EVE ENERGY CO., LTD.) 04 March 2022 (2022-03-04)<br>embodiment 1, and description, paragraphs 8-20 and 96 | 1-10 |
| Y | CN 115799631 A (GAUNGZHOU TINCI MATERIALS TECHNOLOGY CO., LTD. et al.) 14 March 2023 (2023-03-14)<br>embodiment 1 | 1-10 |
| Y | CN 113013491 A (GUANGZHOU TINCI MATERIALS TECHNOLOGY CO., LTD.) 22 June 2021 (2021-06-22)<br>embodiment 1 | 1-10 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **17 January 2025** | **23 January 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No.
**PCT/CN2024/128926**

C. DOCUMENTS CONSIDERED TO BE RELEVANT

| Category* | Citation of document, with indication, where appropriate, of the relevant passages | Relevant to claim No. |
|---|---|---|
| Y | CN 111509298 A (SVOLT ENERGY TECHNOLOGY CO., LTD.) 07 August 2020 (2020-08-07)<br>claims 1-10 | 1-10 |
| Y | CN 108539267 A (CHINA AVIATION LITHIUM BATTERY CO., LTD. et al.) 14 September 2018 (2018-09-14)<br>claims 1-10 | 1-10 |
| Y | CN 111525190 A (ENVISION RUITAI POWER TECHNOLOGY (SHANGHAI) CO., LTD.) 11 August 2020 (2020-08-11)<br>claims 1-10 | 1-10 |
| Y | CN 106129456 A (CHINA AVIATION LITHIUM BATTERY CO., LTD.) 16 November 2016 (2016-11-16)<br>claims 1-10 | 1-10 |
| Y | CN 114221032 A (EVE POWER CO., LTD.) 22 March 2022 (2022-03-22)<br>claims 1-10 | 1-10 |
| Y | WO 2023213329 A1 (EVE POWER CO., LTD.) 09 November 2023 (2023-11-09)<br>claims 1-10 | 1-10 |
| A | CN 111244545 A (ZHUHAI COSMX BATTERY CO., LTD.) 05 June 2020 (2020-06-05)<br>claims 1-10 | 1-10 |
| A | CN 116525946 A (NINGDE AMPEREX TECHNOLOGY LTD.) 01 August 2023 (2023-08-01)<br>claims 1-15 | 1-10 |
| A | US 2015200422 A1 (SAMSUNG SDI CO., LTD.) 16 July 2015 (2015-07-16)<br>claims 1-19 | 1-10 |

Form PCT/ISA/210 (second sheet) (July 2022)

**INTERNATIONAL SEARCH REPORT**
**Information on patent family members**

International application No.
**PCT/CN2024/128926**

| Patent document cited in search report | Publication date (day/month/year) | Patent family member(s) | Publication date (day/month/year) |
|---|---|---|---|
| CN 117276672 A | 22 December 2023 | None | |
| CN 115863760 A | 28 March 2023 | None | |
| CN 114142091 A | 04 March 2022 | None | |
| CN 115799631 A | 14 March 2023 | None | |
| CN 113013491 A | 22 June 2021 | None | |
| CN 111509298 A | 07 August 2020 | KR 20220127276 A | 19 September 2022 |
| | | US 2023113720 A1 | 13 April 2023 |
| | | JP 2023507022 A | 20 February 2023 |
| | | JP 7416955 B2 | 17 January 2024 |
| | | WO 2021243953 A1 | 09 December 2021 |
| | | EP 4068454 A1 | 05 October 2022 |
| | | EP 4068454 A4 | 30 October 2024 |
| CN 108539267 A | 14 September 2018 | None | |
| CN 111525190 A | 11 August 2020 | None | |
| CN 106129456 A | 16 November 2016 | None | |
| CN 114221032 A | 22 March 2022 | None | |
| WO 2023213329 A1 | 09 November 2023 | None | |
| CN 111244545 A | 05 June 2020 | None | |
| CN 116525946 A | 01 August 2023 | None | |
| US 2015200422 A1 | 16 July 2015 | KR 20150085670 A | 24 July 2015 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202311497329
- CN 113711413 A